# EUROPÄISCHE PATENTSCHRIFT

(11) **EP 3 527 951 B1**
(45) Veröffentlichungstag und Bekanntmachung des Hinweises auf die Patenterteilung: **14.04.2021**
(21) Anmeldenummer: 19154406.3
(22) Anmeldetag: 30.01.2019
(51) Int. Cl.: G01D 5/347, G01D 5/36, G01D 5/38

(54) **OPTISCHE POSITIONSMESSEINRICHTUNG**
OPTICAL POSITIONING DEVICE
DISPOSITIF OPTIQUE DE MESURE DE POSITION

(30) Priorität: 20.02.2018 DE 102018202556
(43) Veröffentlichungstag der Anmeldung: 21.08.2019
(73) Patentinhaber: Dr. Johannes Heidenhain GmbH, 83301 Traunreut (DE)
(72) Erfinder: HERMANN, Michael, 83342 Tacherting (DE)

(56) Entgegenhaltungen:
- EP-A1- 1 420 229
- EP-A1- 2 318 812
- EP-A2- 1 724 548
- EP-A2- 2 525 195
- US-A1- 2014 103 914

## Beschreibung

### BEZEICHNUNG DER ERFINDUNG

### Optische Positionsmesseinrichtung

### GEBIET DER TECHNIK

Die vorliegende Erfindung betrifft eine optische Positionsmesseinrichtung, die zur hochgenauen Bestimmung der Relativposition zweier zueinander beweglicher Objekte geeignet ist.

### STAND DER TECHNIK

Aus der EP 1 724 548 A2 ist eine Positionsmesseinrichtung bekannt, die zur Bestimmung der Relativposition von zwei Objekten geeignet ist, welche entlang mindestens zweier Messrichtungen relativ zueinander beweglich sind. Die Positionsmesseinrichtung umfasst einen Abtastkopf, der mit einem der beiden Objekte verbunden ist, sowie einen Maßstab, der mit dem anderen der beiden Objekte verbunden ist. Der Maßstab weist zwei sich entlang einer ersten Messrichtung erstreckende Spuren mit Inkrementalteilungen auf; die erste Messrichtung wird nachfolgend auch als Hauptmessrichtung bezeichnet. Die jeweils periodisch angeordneten Teilungsbereiche der beiden Inkrementalteilungen nehmen einen Winkel zwischen 0° und 90° zueinander ein, d.h. die beiden Inkrementalteilungen sind verdreht zueinander angeordnet. Über die Abtastung derjenigen Inkrementalteilung, deren Teilungsbereiche senkrecht zur ersten Messrichtung orientiert sind, lassen sich periodische Inkrementalsignale für eine Relativpositionsbestimmung entlang der ersten Messrichtung bzw. Hauptmessrichtung erzeugen. Aus der Abtastung der demgegenüber schräg bzw. verdreht angeordneten Inkrementalteilung kann eine weitere relative Positionsinformation bezüglich einer eventuell resultierenden Bewegung entlang einer zweiten Messrichtung messtechnisch erfasst werden. In der EP 1 724 548 A2 ist eine Anordnung der verdrehten Inkrementalteilung um einen Winkel vorgesehen, der zwischen 0° und 90° liegen kann; erwähnt wird u.a. auch eine Anordnung unter einem Winkel von 45°. Den beiden Inkrementalteilungen ist desweiteren jeweils eine Referenzmarkierung zugeordnet, um entlang der ersten Messrichtung als auch entlang der zweiten Messrichtung eine Absolut- bzw. Referenzposition bestimmen zu können. Beim Überfahren der jeweiligen Referenzmarkierung kann dann etwa ein Zähler auf einen vorbestimmten absoluten Positionswert gesetzt werden, auf den sich dann die nachfolgende Inkrementalmessung bezieht. In Bezug auf die Ausbildung der Referenzmarkierungen enthält die genannte Druckschrift lediglich Angaben zur erforderlichen Ausdehnung, um eine sichere Erfassung derselbigen bei der Abtastung zu gewährleisten. Neben einer Anordnung der Referenzmarkierungen benachbart zu den Inkrementalteilungen ist auch die Möglichkeit erwähnt, die Referenzmarkierungen in die Inkrementalteilungen zu integrieren.

### ZUSAMMENFASSUNG DER ERFINDUNG

Der vorliegenden Erfindung liegt die Aufgabe zugrunde, eine optische Positionsmesseinrichtung zur hochgenauen Positionsbestimmung entlang mindestens zweier Messrichtungen anzugeben, die zwei gegeneinander verdreht angeordnete Inkrementalteilungen mit integrierten Referenzmarkierungen aufweist. Auch beim Überfahren der jeweiligen Referenzmarkierungen entlang der ersten Messrichtung soll die Erzeugung periodischer Inkrementalsignale gewährleistet sein, insbesondere unabhängig davon, in welcher Position sich die Abtasteinheit entlang der zweiten Messrichtung befindet.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Bestimmung der Relativposition von zwei Objekten, die entlang mindestens zweier Messrichtungen relativ zueinander beweglich sind. Sie umfasst zwei Abtasteinheiten, die mit einem der beiden Objekte verbunden sind und jeweils mindestens eine Lichtquelle, ein oder mehrere Gitter sowie eine Detektoranordnung aufweisen. Ferner ist ein Maßstab vorgesehen, der mit dem anderen Objekt verbunden ist und zwei sich entlang einer ersten Messrichtung erstreckende Spuren mit Inkrementalteilungen aufweist, die jeweils aus periodisch entlang einer Inkrementalteilungs-Richtung angeordneten Teilungsbereichen mit unterschiedlichen optischen Eigenschaften bestehen. Die beiden Inkrementalteilungs-Richtungen nehmen einen Winkel zwischen 0° und 90° zueinander ein. In jede der beiden Inkrementalteilungen ist mindestens eine Referenzmarkierung integriert, aus deren Abtastung ein Referenzsignal an einer definierten Referenzposition entlang jeder Messrichtung erzeugbar ist. Die Referenzmarkierung enthält sowohl aperiodische als auch periodische Anteile.

Vorzugsweise ist die Referenzmarkierung in einem flächenmäßig begrenzten Teilbereich in der jeweiligen Inkrementalteilung angeordnet, wobei in diesem Teilbereich der aperiodische Anteil und der periodische Anteil der Referenzmarkierung miteinander vermischt ausgebildet sind.

Hierbei kann der Teilbereich rechteckförmig ausgebildet und die RechtecksLängsachse senkrecht zur Inkrementalteilungs-Richtung in der jeweiligen Inkrementalteilung orientiert sein.

Es ist ferner möglich, dass sich die rechteckförmige Referenzmarkierung über die gesamte Breite der Spur mit der jeweiligen Inkrementalteilung erstreckt.

In einer möglichen Ausführungsform sind senkrecht zur jeweiligen Inkrementalteilungs-Richtung die aperiodischen und periodischen Anteile der Referenzmarkierung räumlich getrennt ausgebildet.

Dabei kann der periodische Anteil der Referenzmarkierung eine erste Referenzmarkierungs-Gitterkonstante aufweisen, die identisch mit der jeweiligen Inkrementalteilungs-Gitterkonstanten ist; der aperiodische Anteil der Referenzmarkierung kann jeweils mehrere Gitterstrukturen enthalten, welche eine zweite Referenzmarkierungs-Gitterkonstante aufweisen, die sich entlang der Inkrementalteilungs-Richtung örtlich ändert.

Desweiteren kann in einer derartigen Ausführungsform der aperiodische Anteil der Referenzmarkierung jeweils mehrere spiegelsymmetrisch ausgebildete Gitterstrukturen umfassen, deren zweite Referenzmarkierungs-Gitterkonstante sich ausgehend von einer zentralen Symmetrieachse senkrecht zur Inkrementalteilungs-Richtung nach außen hin symmetrisch vergrößert.

Hierbei ist möglich, dass die aperiodischen Anteile der Referenzmarkierung senkrecht zur Inkrementalteilungs-Richtung periodisch mit einer dritten Referenzmarkierungs-Gitterkonstante angeordnet sind.

Vorzugsweis wird die dritte Referenzmarkierungs-Gitterkonstante derart gewählt, dass eine Verschiebung einer Abtasteinheit senkrecht zur Inkrementalteilungs-Richtung keine Signaländerung verursacht. Desweiteren kann vorgesehen sein, dass die periodischen und aperiodischen Anteile der Referenzmarkierung ein Flächenverhältnis von 1:1 zueinander aufweisen.

In einer weiteren möglichen Ausführungsform ist der periodische Anteil der Referenzmarkierung als periodische Überstruktur in den aperiodischen Anteil der Referenzmarkierung integriert ausgebildet.

Hierbei kann der periodische Anteil der Referenzmarkierung eine Referenzmarkierungs-Fein-Gitterkonstante aufweisen, die der Inkrementalteilungs-Gitterkonstante der jeweiligen Inkrementalteilung entspricht; ferner kann der aperiodische Anteil der Referenzmarkierung durch zwei unterschiedliche Referenzmarkierungs-Bereiche gebildet sein, die alternierend mit einer Referenzmarkierungs-Grob-Gitterkonstante entlang der Inkrementalteilungs-Richtung angeordnet sind und jeweils unterschiedliche Verhältnisse aus Teilungsbereich-Breite und Referenzmarkierungs-Fein-Gitterkonstante aufweisen.

Ferner können die unterschiedlich ausgebildeten Referenzmarkierungs-Bereiche aperiodisch entlang der Inkrementalteilungs-Richtung angeordnet sein und ausgehend von einer zentralen Symmetrieachse die Referenzmarkierungs-Bereiche spiegelsymmetrisch und nach außen hin mit jeweils sich vergrößernden Referenzmarkierungs-Grob-Gitterkonstanten angeordnet sein.

Vorzugsweise ist vorgesehen, dass
- in der Abtasteinheit einer divergent abstrahlenden Lichtquelle eine Sendegitter-Anordnung vorgeordnet ist, bestehend aus einem periodischen Transmissions-Sendegitter sowie einem benachbart angeordneten Sendespalt und
- wobei die Detektoranordnung einen Inkrementalsignal-Detektor sowie einen Referenzsignal-Detektor umfasst.

Desweiteren erweist sich als vorteilhaft, wenn der Maßstab als Reflexions-Maßstab ausgebildet ist und alternierend angeordnete reflektive Teilungsbereiche mit unterschiedlichen phasenschiebenden Wirkungen aufweist.

Als besonders vorteilhaft erweist sich bei der erfindungsgemäßen optischen Positionsmesseinrichtung, dass auch beim Überfahren der jeweiligen Referenzmarkierung periodische Inkrementalsignale entlang einer oder mehrerer Messrichtungen grundsätzlich verfügbar sind.

Desweiteren ist gewährleistet, dass die Herstellung eines absoluten Positionsbezugs entlang der ersten und zweiten Messrichtung allein durch die Relativbewegung von Maßstab und Abtasteinheiten entlang der ersten Messrichtung möglich ist.

Ferner ist eine Herstellung des Absolutbezugs entlang der ersten und zweiten Messrichtung für jede Position der Abtasteinheiten entlang der zweiten Messrichtung gewährleistet.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1a, 1b: jeweils eine schematisierte Schnittansicht mit dem Teil-Abtaststrahlengang eines ersten Ausführungsbeispiels der erfindungsgemäßen optischen Positionsmesseinrichtung;

- Figur 2: eine Teil-Draufsicht auf den Maßstab des ersten Ausführungsbeispiels aus den Figuren 1a, 1b;
- Figur 3: eine Detailansicht des Maßstabs aus Figur 2;
- Figur 4: eine Draufsicht auf eine Abtasteinheit des ersten Ausführungsbeispiels aus den Figuren 1a, 1b;
- Figur 5: eine Detailansicht der Referenzsignal-Detektoranordnung aus Figur 4;
- Figur 6: eine Teilansicht eines Maßstabs eines zweiten Ausführungsbeispiels der erfindungsgemäßen optischen Positionsmesseinrichtung.

### BESCHREIBUNG DER AUSFÜHRUNGSFORMEN

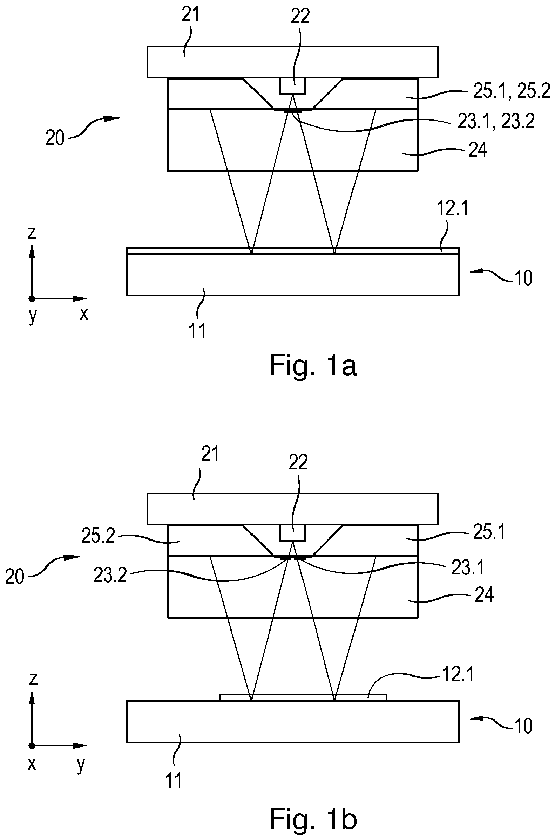

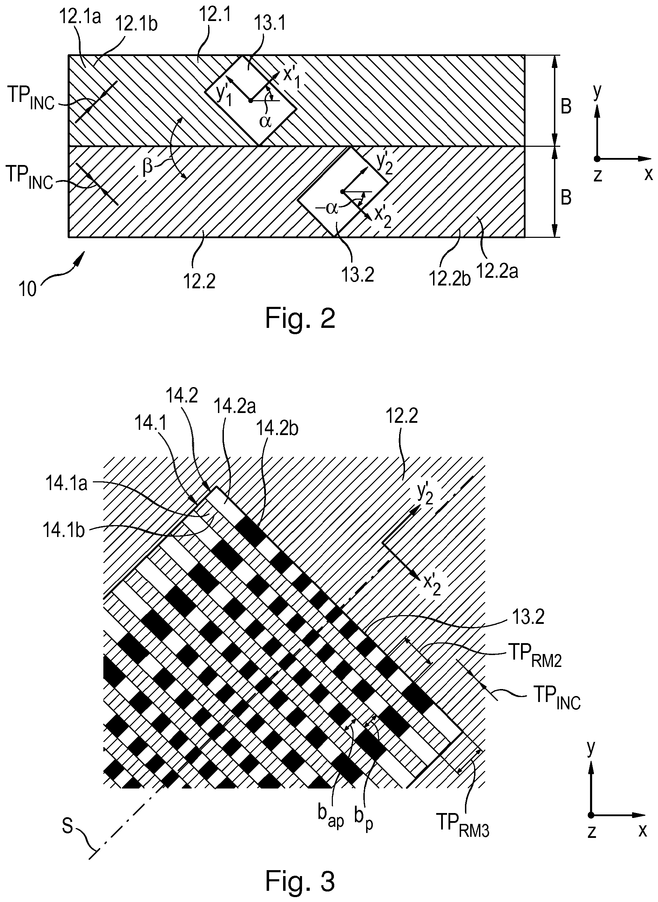

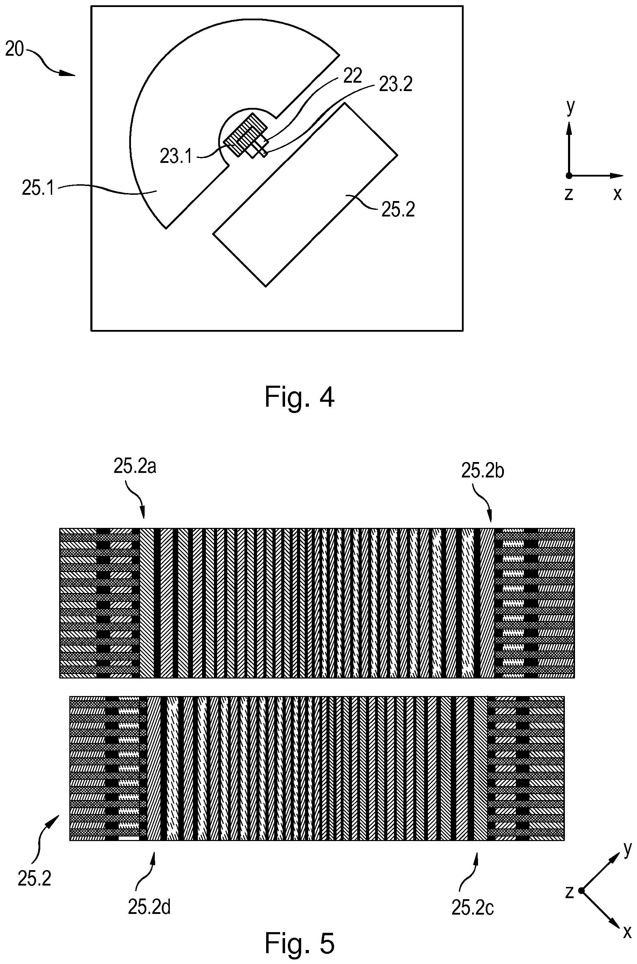

Ein erstes Ausführungsbeispiel der erfindungsgemäßen optischen Positionsmesseinrichtung wird nachfolgend anhand der Figuren 1a - 5 im Detail beschrieben. Die Figuren 1a, 1b zeigen hierbei in schematisierter Form den Teil-Abtaststrahlengang in verschiedenen Schnittansichten, Figur 2 eine Teil-Draufsicht auf den Maßstab, Figur 3 eine vergrößerte Detailansicht des Maßstabs, Figur 4 eine Draufsicht auf eine Abtasteinheit und Figur 5 eine Detail-Ansicht der Referenzsignal-Detektoranordnung.

Im dargestellten Ausführungsbeispiel ist die erfindungsgemäße optische Positionsmesseinrichtung als Auflicht-Längenmessgerät ausgebildet und umfasst einen Abtastkopf mit zwei identisch ausgebildeten Abtasteinheiten. In den Figuren 1a und 1b ist lediglich eine der beiden Abtasteinheiten dargestellt und dort mit dem Bezugszeichen 20 bezeichnet. Der Abtastkopf und damit die beiden Abtasteinheiten 20 sind gegenüber einem Maßstab 10 entlang zweier Messrichtungen x, y beweglich angeordnet. Die beiden Messrichtungen x, y sind im vorliegenden Ausführungsbeispiel senkrecht zueinander orientiert. Die Messrichtung x sei nachfolgend auch als erste Messrichtung oder HauptMessrichtung bezeichnet, die Messrichtung y als zweite Messrichtung bzw. Nebenmessrichtung. Der Maßstab 10 und der Abtastkopf bzw. die Abtasteinheiten 20 sind z.B. mit zwei - nicht in den Figuren dargestellten - Objekten verbunden, die entlang der beiden Messrichtungen x, y beweglich zueinander sind. Dabei kann es sich beispielsweise um zwei zueinander bewegliche Maschinenteile handeln, die primär entlang der HauptMessrichtung x über eine größere Messstrecke bis zu mehreren Metern verschiebbar sind. Verursacht durch Führungstoleranzen resultiert auch eine Relativbewegung entlang der Neben-Messrichtung y, typischerweise liegt entlang der Neben-Messrichtung y aber nur eine kleine zu erfassende Messtrecke im Bereich im Bereich weniger Millimeter vor. Über die positionsabhängigen Ausgangssignale der erfindungsgemäßen optischen Positionsmesseinrichtung entlang der beiden Messrichtungen x, y in Form von Inkrementalsignalen und Referenzsignalen kann eine nachgeordnete Steuereinheit die Bewegung dieser Maschinenteile in geeigneter Art und Weise steuern.

In den Abtasteinheiten 20 der Positionsmesseinrichtung sind auf einem Trägerelement 21 eine Lichtquelle 22 sowie benachbart hierzu eine Detektoranordnung mit einem Inkrementalsignal-Detektor 25.1 sowie einem Referenzsignal-Detektor 25.2 vorgesehen. Der divergent abstrahlenden Lichtquelle 22 ist in Lichtausbreitungsrichtung eine Sendegitter-Anordnung vorgeordnet, die ein periodisches Transmissions-Sendegitter 23.1 sowie einen benachbart hierzu angeordneten Sendespalt 23.2 umfasst.

Der Referenzsignal-Detektor 25.2 einer Abtasteinheit ist in Figur 5 in einer vergrößerten Darstellung gezeigt. Er besteht aus insgesamt vier Detektor-Arrays 25.2a - 25.2d, die jeweils eine Mehrzahl von rechteckförmigen optoelektronischen Detektorelementen umfassen. In Bezug auf weitere Details zur konkreten Ausbildung des Referenzsignal-Detektors 25.2 sei ausdrücklich auf die EP 2 525 195 A2 der Anmelderin verwiesen, insbesondere auf das Ausführungsbeispiel der Figur 10.

Aus der Wechselwirkung der von der Lichtquelle 22 emittierten Lichtstrahlen mit den im Abtaststrahlengang vorgesehenen Gittern, d.h. mit dem Transmissions-Sendegitter 23.1, dem Sendespalt 23.2 und dem Maßstab 10, resultiert in einer Detektionsebene der Detektoranordnung ein verschiebungsabhängiges Signalmuster. Über die optoelektronische Abtastung dieses Signalmusters mit Hilfe der ersten Abtasteinheit 20 werden periodische Inkrementalsignale sowie Referenzsignale entlang der Richtung X₁' erzeugt, die nachfolgend als Inkrementalteilungsrichtung X₁' definiert wird; mit der zweiten - nicht dargestellten - Abtasteinheit werden periodische Inkrementalsignale sowie Referenzsignale entlang der ebenfalls nachfolgend definierten, weiteren Inkrementalteilungsrichtung X₂' erzeugt.

Auf Seiten des Maßstabs 10 sind wie aus Figur 2 ersichtlich auf einem Maßstabsträger 11 zwei sich entlang der ersten Messrichtung x erstreckende Spuren mit Inkrementalteilungen 12.1, 12.2 angeordnet. Die Inkrementalteilungen 12.1, 12.2 bestehen jeweils aus periodisch mit der Inkrementalteilungs-Gitterkonstanten TP_{INC} angeordneten, strichförmigen Teilungsbereichen 12.1a, 12.1b, 12.2a, 12.2b mit unterschiedlichen optischen Eigenschaften. Im vorliegenden Beispiel mit einem Reflexions-Maßstab 10 weisen die alternierend angeordneten, reflektiven Teilungsbereiche 12.1a, 12.1b, 12.2a, 12.2b unterschiedliche phasenschiebende Wirkungen bzw. einen unterschiedlichen Phasenhub auf; beispielsweise können alternierend Teilungsbereiche 12.1a, 12.1b, 12.2a, 12.2b mit 0° Phasenhub und 180° Phasenhub vorgesehen sein. Die Teilungsbereiche 12.1a, 12.1b, 12.2a, 12.2b sind wie aus Figur 2 ersichtlich jeweils entlang einer Richtung periodisch aufeinanderfolgend angeordnet, die nachfolgend als Inkrementalteilungs-Richtung x₁' bzw. x₂' bezeichnet wird. In Längsrichtung erstrecken sich die Teilungsbereiche 12.1a, 12.1b, 12.2a, 12.2b wie gezeigt entlang der Richtungen y₁', y₂', die jeweils senkrecht zu den Inkrementalteilungs-Richtungen x₁', x₂' orientiert sind. Im dargestellten Ausführungsbeispiel nehmen die Inkrementalteilungs-Richtungen x₁', x₂' in den beiden Spuren einen Winkel β = 90° zueinander ein; generell ist dieser Winkel β im Bereich zwischen 0° und 90° zu wählen. Mit α wird gemäß Figur 2 in den beiden Inkrementalteilungen 12.1, 12.2 der Winkel zwischen der jeweiligen Inkrementalteilungs-Richtung x₁', x₂' und der ersten Messrichtung x bezeichnet. Für die Inkrementalteilung 12.1 gilt hierbei α = 45°, für die Inkrementalteilung 12.2 ist α = - 45° gewählt. Als Inkrementalteilungs-Gitterkonstante TP_{INC} ist in diesem Ausführungsbeispiel TP_{INC} = 8µm vorgesehen.

In jede der beiden Inkrementalteilungen 12.1, 12.2 ist wie desweiteren aus Figur 2 ersichtlich mindestens eine Referenzmarkierung 13.1, 13.2 integriert. Über die Referenzmarkierungen 13.1, 13.2 kann ein Absolutbezug bei der Positionsmessung hergestellt werden. Hierzu wird beim Überfahren der Referenzmarkierung 13.1, 13.2 z.B. ein Zähler auf einen vorbestimmten absoluten Positionswert gesetzt, auf den sich dann die nachfolgende hochauflösende Inkrementalmessung bezieht. Aus der optischen Abtastung der Referenzmarkierungen 13.1, 13.2 lässt sich jeweils ein Referenzsignal an einer definierten Referenzposition x_{REF}, y_{REF} entlang der beiden Messrichtungen x, y erzeugen. Die Größen x_{REF}, y_{REF} sind hierbei nur rechnerische Werte, die vom Anwender vorgegeben werden. Die getrennten Zählerwerte beider Spuren können durch die Referenzmarkenfahrt genullt oder auf einen vorbestimmten absoluten Positionswert gesetzt werden. Über die nachfolgend im Detail erläuterte Ausgestaltung der Referenzmarkierungen 13.1, 13.2 ist es dabei möglich, dass eine Referenzierung der beiden Spuren mit den Inkrementalteilungen 12.1, 12.2 entlang der beiden Messrichtungen x, y nur durch eine Relativbewegung entlang der ersten Messrichtung x erfolgen kann. Ebenso ist eine Kompensation von eventuell resultierenden Fehlern der Inkrementalsignale entlang beider Inkrementalteilungsrichtungen x₁', x₂' allein durch eine Relativbewegung von Maßstab 10 und Abtasteinheit 20 entlang der Hauptmessrichtung x möglich.

Die Referenzmarkierung 13.1, 13.2 ist jeweils in einem flächenmäßig begrenzten Teilbereich in der jeweiligen Inkrementalteilung 12.1, 12.2 angeordnet. Innerhalb dieses Teilbereichs sind erfindungsgemäß sowohl periodische als auch aperiodische Anteile der Referenzmarkierung 13.1, 13.2 vorgesehen und miteinander vermischt ausgebildet. Über eine derartige Ausgestaltung der Referenzmarkierungen 13.1, 13.2 ist zum einen die Detektierbarkeit der Referenzmarkierungen 13.1, 13.2 gewährleistet, zum anderen ist sichergestellt, dass auch beim Überfahren dieser Referenzmarkierungen 13.1, 13.2 stets periodische Inkrementalsignale verfügbar sind.

Im Ausführungsbeispiel der Figur 2 ist der Teilbereich mit der Referenzmarkierung 13.1, 13.2 in den Inkrementalteilungen 12.1, 12.2 jeweils rechteckförmig ausgebildet. Die Rechteckslängsachse der beiden Teilbereiche ist dabei senkrecht zur Inkrementalteilungs-Richtung x₁' bzw. x₂' orientiert, die entsprechende Richtung ist in Figur 2 mit y₁' bzw. y₂' bezeichnet. Desweiteren sind die Abmessungen des Teilbereichs so gewählt, dass sich die rechteckförmige Referenzmarkierung 13.1, 13.2 über die gesamte Breite B der Spur mit der jeweiligen Inkrementalteilung 12.1, 12.2 erstreckt.

Im Hinblick auf die konkrete Ausbildung eines ersten Ausführungsbeispiels einer geeigneten Referenzmarkierung sei auf die Detail-Teildarstellung der Referenzmarkierung 13.2 in Figur 3 verwiesen. In diesem Ausführungsbeispiel ist vorgesehen, dass senkrecht zur Inkrementalteilungs-Richtung x₂' die aperiodischen und periodischen Anteile 14.2, 14.1 der Referenzmarkierung 13.2 räumlich getrennt voneinander ausgebildet sind. In einem nachfolgend noch zu erläuternden Ausführungsbeispiel ist demgegenüber alternativ eine Integration des periodischen Anteils der Referenzmarkierung in den aperiodischen Anteil vorgesehen.

Als periodische Anteile 14.1 der Referenzmarkierung 13.2 fungieren streifenförmige Bereiche mit einer periodischen Gitterstruktur, die eine erste Referenzmarkierungs-Gitterkonstante TP_{RM1} aufweisen. Die erste Referenzmarkierungs-Gitterkonstante TP_{RM1} ist hierbei identisch mit der Inkrementalteilungs-Gitterkonstante TP_{INC} in der umgebenden Inkrementalteilung 12.2 der jeweiligen Spur. Die streifenförmigen Bereiche erstrecken sich in der Referenzmarkierung 13.2 entlang der Inkrementalteilungs-Richtung x₂'. Innerhalb der streifenförmigen Bereiche sind demzufolge analog zur Ausbildung der Inkrementalteilung 12.2 die Teilungsbereiche 14.1a, 14.1b mit unterschiedlichen optischen Eigenschaften, also vorliegend mit unterschiedlichem Phasenhub, periodisch entlang der Inkrementalteilungsrichtung x₂' mit der ersten Referenzmarkierungs-Gitterkonstante TP_{RM1} = TP_{INC} angeordnet.

Der von den periodischen Anteilen 14.1 räumlich getrennte, aperiodische Anteil 14.2 der Referenzmarkierung 13.2 wird in weiteren streifenförmigen Bereichen ausgebildet. Dort sind Gitterstrukturen angeordnet, die eine zweite Referenzmarkierungs-Gitterkonstante TP_{RM2} aufweisen, die sich entlang der Inkrementalteilungsrichtung x₂' örtlich ändert; in diesem Zusammenhang sei auch von symmetrisch gechirpten Gitterstrukturen die Rede. Konkret sind in den streifenförmigen Bereichen spiegelsymmetrisch zu einer zentralen Symmetrieachse S ausgebildete Gitterstrukturen aus alternierend angeordneten Teilungsbereichen 14.2a, 14.2b mit unterschiedlichen optischen Eigenschaften vorgesehen. Innerhalb der Bereiche vergrößert sich die zweite Referenzmarkierungs-Gitterkonstante TP_{RM2} der Gitterstrukturen ausgehend von der Symmetrieachse S senkrecht zur Inkrementalteilungsrichtung x₂' nach außen hin symmetrisch.

In Bezug auf die Wahl eines geeigneten Chirpverlaufs und dessen exakte mathematische Charakterisierung in derartigen Gitterstrukturen sei ergänzend auf die EP 2 318 812 A1 verwiesen, auf deren Offenbarungsgehalt hiermit ausdrücklich Bezug genommen wird.

Senkrecht zur Inkrementalteilungsrichtung x₂', also entlang der Richtung y₂', weisen die streifenförmigen Bereiche mit den periodischen Anteilen 14.1 und den aperiodischen Anteilen 14.2 der Referenzmarkierung 13.2 im vorliegenden Ausführungsbeispiel die gleiche Breite bₚ, bₐₚ auf; damit besitzen die periodischen und aperiodischen Anteile 14.1, 14.2 der Referenzmarkierung 13.2 ein Flächenverhältnis von 1:1 zueinander. Grundsätzlich lässt sich über die Wahl dieses Flächenverhältnisses das Signalgrößenverhältnis der erzeugten Inkremental- und Referenzsignale definiert einstellen. Sowohl die periodischen Anteile 14.1 als auch die aperiodischen Anteile 14.2 der Referenzmarkierung 13.2 sind entlang der Richtung y₂' im dargestellten Beispiel damit periodisch mit einer dritten Referenzmarkierungs-Gitterkonstante TP_{RM3} angeordnet. In einer möglichen Ausführungsform wird eine Breite bₚ, bₐₚ der streifenförmigen Bereiche mit den periodischen und aperiodischen Anteilen 14.1, 14.2 von jeweils 128µm gewählt, womit die dritte Referenzmarkierungs-Gitterkonstante TP_{RM3} = 256µm beträgt.

Über die Wahl einer geeigneten dritten Referenzmarkierungs-Gitterkonstante TP_{RM3} kann desweiteren sichergestellt werden, dass auch im Fall einer eventuellen Verschiebung der Abtasteinheit senkrecht zur Inkrementalteilungsrichtung x₂', also entlang der Richtung y₂', keine Änderungen in den erzeugten Inkremental- und Referenzsignalen resultiert. Hierbei erweist es sich grundsätzlich als vorteilhaft, wenn die dritte Referenzmarkierungs-Gitterkonstante TP_{RM3} möglichst feinperiodisch gewählt wird.

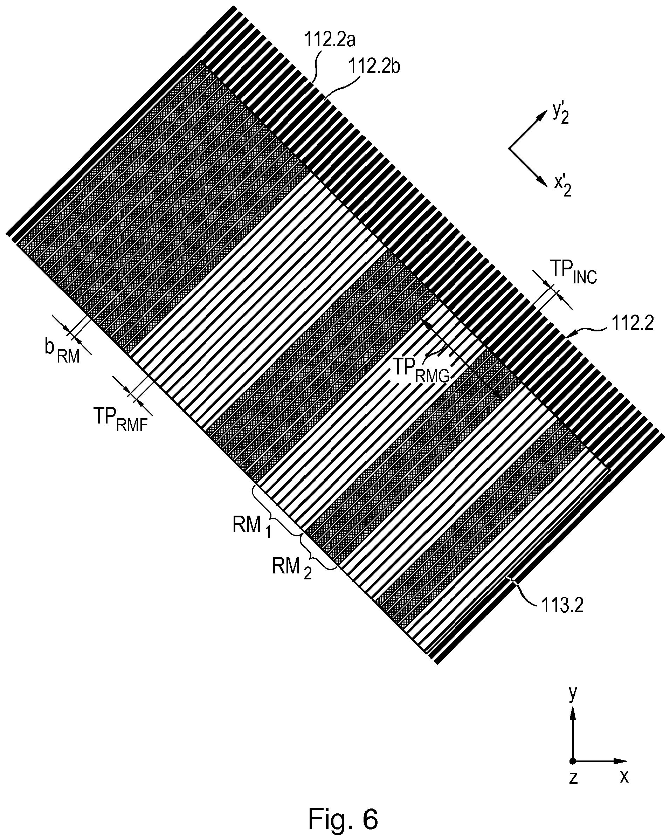

Ein zweites Ausführungsbeispiel einer geeigneten Referenzmarkierung wird abschließend anhand der Teildarstellung der Referenzmarkierung 113.2 in Figur 6 erläutert; es sei darauf hingewiesen, dass in der Figur nicht die komplette Referenzmarkierung gezeigt ist. In diesem Ausführungsbeispiel ist nunmehr vorgesehen, dass der periodische Anteil der Referenzmarkierung als periodische Überstruktur in den aperiodischen Anteil der Referenzmarkierung integriert ausgebildet ist.

Die Referenzmarkierung 113.2 ist wie im vorherigen Beispiel integriert in eine Inkrementalteilung 112.2 mit der Inkrementalteilungs-Gitterkonstanten TP_{INC} angeordnet; in einem möglichen Ausführungsbeispiel wird TP_{INC} = 8µm gewählt. Im Hinblick auf die Relativanordnung und Orientierung des rechteckförmigen Teilbereichs mit der Referenzmarkierung 113.2 sei auf die obigen Erläuterungen verwiesen.

Der periodische Anteil der Referenzmarkierung in Form einer periodischen Überstruktur wird durch eine entlang der Inkrementalteilungsrichtung x₂' über die gesamte Breite der Referenzmarkierung 113.2 gleichbleibende Referenzmarkierungs-Fein-Gitterkonstante TP_{RMF} ausgebildet. Die Referenzmarkierungs-Fein-Gitterkonstante TP_{RMF} entspricht dabei der Inkrementalteilungs-Gitterkonstanten TP_{INC}.

Der aperiodische Anteil der Referenzmarkierung wird in diesem Ausführungsbeispiel durch zwei unterschiedliche Referenzmarkierungs-Bereiche RM₁, RM₂ gebildet, die alternierend mit einer Referenzmarkierungs-Grob-Gitterkonstante TP_{RMG} entlang der Inkrementalteilungs-Richtung x₂' angeordnet sind. Die unterschiedlichen Referenzmarkierungs-Bereiche RM₁, RM₂ weisen dabei jeweils unterschiedliche Verhältnisse V aus Teilungsbereich-Breite b_{RM} und Referenzmarkierungs-Fein-Gitterkonstante TP_{RMF} auf. So ist im Referenzmarkierungs-Bereich RM₁ etwa eine Breite b_{RM} = 1.6µm und damit ein Verhältnis V = b_{RM} / TP_{RMF} = 0.2 vorgesehen. Im Referenzmarkierungs-Bereich RM₂ ist eine Breite b_{RM} = 6.4µm und damit ein Verhältnis V = bRM / TP_{RMF} = 0.8 gewählt.

Die unterschiedlich ausgebildeten Referenzmarkierungs-Bereiche RM₁, RM₂ sind aperiodisch entlang der Inkrementalteilungs-Richtung x₂' in der Referenzmarkierung 113.2 angeordnet. Ausgehend von einer - nicht in Figur 6 dargestellten - zentralen Symmetrieachse sind die Referenzmarkierungs-Bereiche RM₁, RM₂ spiegelsymmetrisch und nach außen hin mit jeweils sich vergrößernden Referenzmarkierungs-Grob-Gitterkonstanten TP_{RMG} angeordnet.

Neben den konkret beschriebenen Ausführungsbeispielen existieren im Rahmen der vorliegenden Erfindung selbstverständlich noch weitere Ausgestaltungsmöglichkeiten.

So ist selbstverständlich auch möglich, rotatorische Positionsmesseinrichtungen erfindungsgemäß auszubilden. Hierbei entspricht die Referenzmarkierung einer zweiten Spur nicht einer Drehung der Referenzmarkierung einer ersten Spur, d.h. die in den beiden Spuren vorgesehenen Referenzmarkierungen sind in diesem Fall unterschiedlich ausgebildet. Abhängig vom Abtastradius müssen mindestens die Teilungsperioden der periodischen Anteile der beiden Referenzmarkierungen verschieden gewählt werden.

## Patentansprüche

1. Optische Positionsmesseinrichtung zur Bestimmung der Relativposition von zwei Objekten, die entlang mindestens zweier Messrichtungen (x, y) relativ zueinander beweglich sind, mit
- zwei Abtasteinheiten (20), die mit einem der beiden Objekte verbunden sind und jeweils mindestens eine Lichtquelle (22), ein oder mehrere Gitter (23.1, 23.2) sowie eine Detektoranordnung umfassen und
- einem Maßstab (10), der mit dem anderen Objekt verbunden ist und zwei sich entlang einer ersten Messrichtung (x) erstreckenden Spuren mit Inkrementalteilungen (12.1, 12.2; 112.2) aufweist, die jeweils aus periodisch entlang einer Inkrementalteilungs-Richtung (x₁', x₂') angeordneten Teilungsbereichen (12.1a, 12.1b, 12.2a, 12.2b; 112.2a, 112.2b) mit unterschiedlichen optischen Eigenschaften bestehen, wobei die beiden Inkrementalteilungs-Richtungen (x₁', x₂') einen Winkel (β) zwischen 0° und 90° zueinander einnehmen und in jede der beiden Inkrementalteilungen (12.1, 12.2; 112.2) mindestens eine Referenzmarkierung (13.1, 13.2; 113.2) integriert ist, aus deren Abtastung ein Referenzsignal an einer definierten Referenzposition (x_{REF}, y_{REF}) entlang jeder Messrichtung (x, y) erzeugbar ist und wobei die Referenzmarkierung (13.1, 13.2; 113.2) sowohl aperiodische als auch periodische Anteile (14.1, 14.2) enthält.

2. Optische Positionsmesseinrichtung nach Anspruch 1, wobei die Referenzmarkierung (13.1, 13.2; 113.2) in einem flächenmäßig begrenzten Teilbereich in der jeweiligen Inkrementalteilung (12.1, 12.2; 112.2) angeordnet ist und in diesem Teilbereich der aperiodische Anteil und der periodische Anteil der Referenzmarkierung (14.1, 14.2) miteinander vermischt ausgebildet sind.

3. Optische Positionsmesseinrichtung nach Anspruch 2, wobei der Teilbereich rechteckförmig ausgebildet ist und die RechtecksLängsachse senkrecht zur Inkrementalteilungs-Richtung (x₁', x₂') in der jeweiligen Inkrementalteilung (12.1, 12.2; 112.2) orientiert ist.

4. Optische Positionsmesseinrichtung nach Anspruch 3, wobei sich die rechteckförmige Referenzmarkierung (13.1, 13.2; 113.2) über die gesamte Breite (B) der Spur mit der jeweiligen Inkrementalteilung (12.1, 12.2; 112.2) erstreckt.

5. Optische Positionsmesseinrichtung nach mindestens einem der vorhergehenden Ansprüche, wobei senkrecht zur jeweiligen Inkrementalteilungs-Richtung (x₁', x₂') die aperiodischen und periodischen Anteile der Referenzmarkierung (14.1, 14.2) räumlich getrennt ausgebildet sind.

6. Optische Positionsmesseinrichtung nach Anspruch 5, wobei
- der periodische Anteil der Referenzmarkierung (14.1) eine erste Referenzmarkierungs-Gitterkonstante (TP_{RM1}) aufweist, die identisch mit der jeweiligen Inkrementalteilungs-Gitterkonstanten (TP_{INC}) ist und
- der aperiodische Anteil der Referenzmarkierung (14.2) jeweils mehrere Gitterstrukturen enthält, welche eine zweite Referenzmarkierungs-Gitterkonstante (TP_{RM2}) aufweisen, die sich entlang der Inkrementalteilungs-Richtung (x₁', x₂') örtlich ändert.

7. Optische Positionsmesseinrichtung nach Anspruch 6, wobei der aperiodische Anteil der Referenzmarkierung (14.2) jeweils mehrere spiegelsymmetrisch ausgebildete Gitterstrukturen umfasst, deren zweite Referenzmarkierungs-Gitterkonstante (TP_{RM2}) sich ausgehend von einer zentralen Symmetrieachse (S) senkrecht zur Inkrementalteilungs-Richtung (x₁', x₂') nach außen hin symmetrisch vergrößert.

8. Optische Positionsmesseinrichtung nach Anspruch 5, wobei die aperiodischen Anteile der Referenzmarkierung (14.2) senkrecht zur Inkrementalteilungs-Richtung (x₁', x₂') periodisch mit einer dritten Referenzmarkierungs-Gitterkonstante (TP_{RM3}) angeordnet sind.

9. Optische Positionsmesseinrichtung nach Anspruch 8, wobei die dritte Referenzmarkierungs-Gitterkonstante (TP_{RM3}) derart gewählt ist, dass eine Verschiebung einer Abtasteinheit (20) senkrecht zur Inkrementalteilungs-Richtung (x₁', x₂') keine Signaländerung verursacht.

10. Optische Positionsmesseinrichtung nach Anspruch 5, wobei die periodischen und aperiodischen Anteile der Referenzmarkierung (14.1, 14.2) ein Flächenverhältnis von 1:1 zueinander aufweisen.

11. Optische Positionsmesseinrichtung nach mindestens einem der Ansprüche 1 - 4, wobei der periodische Anteil der Referenzmarkierung als periodische Überstruktur in den aperiodischen Anteil der Referenzmarkierung (113.2) integriert ausgebildet ist.

12. Optische Positionsmesseinrichtung nach Anspruch 11, wobei
- der periodische Anteil der Referenzmarkierung eine Referenzmarkierungs-Fein-Gitterkonstante (TP_{RMF}) aufweist, die der Inkrementalteilungs-Gitterkonstante (TP_{INC}) der jeweiligen Inkrementalteilung (112.2) entspricht und
- der aperiodische Anteil der Referenzmarkierung durch zwei unterschiedliche Referenzmarkierungs-Bereiche gebildet ist, die alternierend mit einer Referenzmarkierungs-Grob-Gitterkonstante (TP_{RMG}) entlang der Inkrementalteilungs-Richtung (x₁', x₂') angeordnet sind und jeweils unterschiedliche Verhältnisse aus Teilungsbereich-Breite (b_{RM}) und Referenzmarkierungs-Fein-Gitterkonstante (TPF_{RMF}) aufweisen.

13. Optische Positionsmesseinrichtung nach Anspruch 12, wobei die unterschiedlich ausgebildeten Referenzmarkierungs-Bereiche aperiodisch entlang der Inkrementalteilungs-Richtung (x₁', x₂') angeordnet sind und ausgehend von einer zentralen Symmetrieachse die Referenzmarkierungs-Bereiche spiegelsymmetrisch und nach außen hin mit jeweils sich vergrößernden Referenzmarkierungs-Grob-Gitterkonstanten (TP_{RMG}) angeordnet sind.

14. Optische Positionsmesseinrichtung nach mindestens einem der vorhergehenden Ansprüche,
- wobei in der Abtasteinheit (20) einer divergent abstrahlenden Lichtquelle (22) eine Sendegitter-Anordnung vorgeordnet ist, bestehend aus einem periodischen Transmissions-Sendegitter (23.1) sowie einem benachbart angeordneten Sendespalt (23.2) und
- wobei die Detektoranordnung einen Inkrementalsignal-Detektor (25.1) sowie einen Referenzsignal-Detektor (25.2) umfasst.

15. Optische Positionsmesseinrichtung nach mindestens einem der vorhergehenden Ansprüche, wobei der Maßstab (10) als Reflexions-Maßstab ausgebildet ist und alternierend angeordnete reflektive Teilungsbereiche mit unterschiedlichen phasenschiebenden Wirkungen aufweist.

## Claims

1. Optical position measuring device for determining the relative position of two objects which are movable relative to one another along at least two measurement directions (x, y), comprising
- two scanning units (20), which are connected to one of the two objects and each comprise at least one light source (22), one or more gratings (23.1, 23.2) and a detector arrangement, and
- a measure (10) connected to the other object and comprising two tracks with incremental graduations (12.1, 12.2; 112.2) which extend along a first measurement direction (x) and which each consist of graduation regions (12.1a, 12.1b, 12.2a, 12.2b; 112.2a, 112.2b) with different optical properties that are arranged in periodic fashion along an incremental graduation direction (x₁', x₂'), wherein the two incremental graduation directions (x₁', x₂') assume an angle (β) of between 0° and 90° with respect to one another and at least one reference marking (13.1, 13.2; 113.2) is integrated in each of the two incremental graduations (12.1, 12.2; 112.2), the scanning of said reference marking rendering generable a reference signal at a defined reference position (x_{REF}, y_{REF}) along each measurement direction (x, y), and wherein the reference marking (13.1, 13.2; 113.2) contains both aperiodic and periodic components (14.1, 14.2).

2. Optical position measuring device according to Claim 1, wherein the reference marking (13.1, 13.2; 113.2) is arranged in a portion, restricted in terms of area, in the respective incremental graduation (12.1, 12.2; 112.2) and the aperiodic component and the periodic component of the reference marking (14.1, 14.2) are embodied in intermixed fashion in this portion.

3. Optical position measuring device according to Claim 2, wherein the portion has a rectangular embodiment and the rectangle longitudinal axis is oriented perpendicular to the incremental graduation direction (x₁', x₂') in the respective incremental graduation (12.1, 12.2; 112.2).

4. Optical position measuring device according to Claim 3, wherein the rectangular reference marking (13.1 13.2; 113.2) extends over the entire width (B) of the track with the respective incremental graduation (12.1, 12.2; 112.2).

5. Optical position measuring device according to at least one of the preceding claims, wherein the aperiodic and periodic components of the reference marking (14.1 14.2) have a spatially separated embodiment perpendicular to the respective incremental graduation direction (x₁', x₂').

6. Optical position measuring device according to Claim 5, wherein
- the periodic component of the reference marking (14.1) has a first reference marking grating constant (TP_{RM1}), which is identical to the respective incremental graduation grating constants (TP_{INC}), and
- the aperiodic component of the reference marking (14.2) respectively contains a plurality of grating structures, which have a second reference marking grating constant (TP_{RM2}), which changes locally along the incremental graduation direction (x₁', x₂').

7. Optical position measuring device according to Claim 6, wherein the aperiodic component of the reference marking (14.2) respectively comprises a plurality of grating structures with a mirror-symmetrical embodiment, the second reference marking grating constant (TP_{RM2}) thereof increasing symmetrically to the outside in a direction perpendicular to the incremental graduation direction (x₁', x₂') proceeding from a central axis of symmetry (S).

8. Optical position measuring device according to Claim 5, wherein the aperiodic components of the reference marking (14.2) are arranged in periodic fashion with a third reference marking grating constant (TP_{RM3}) in a direction perpendicular to the incremental graduation direction (x₁', x₂').

9. Optical position measuring device according to Claim 8, wherein the third reference marking grating constant (TP_{RM3}) is chosen in such a way that a displacement of a scanning unit (20) perpendicular to the incremental graduation direction (x₁', x₂') does not cause any change in signal.

10. Optical position measuring device according to Claim 5, wherein the periodic and aperiodic components of the reference marking (14.1 14.2) have an area ratio of 1:1.

11. Optical position measuring device according to at least one of Claims 1-4, wherein the periodic component of the reference marking is embodied in a manner integrated in the aperiodic component of the reference marking (113.2) as a periodic superstructure.

12. Optical position measuring device according to Claim 11, wherein
- the periodic component of the reference marking has a reference marking fine grating constant (TP_{RMF}), which corresponds to the incremental graduation grating constant (TP_{INC}) of the respective incremental graduation (112.2), and
- the aperiodic component of the reference marking is formed by two different reference marking regions, which are arranged in alternating fashion with a reference marking coarse grating constant (TP_{RMG}) along the incremental graduation direction (x₁', x₂') and which each have different ratios of graduation region width (b_{RM}) and reference marking fine grating constant (TPF_{RMF}).

13. Optical position measuring device according to Claim 12, wherein the differently embodied reference marking regions are arranged in aperiodic fashion along the incremental graduation direction (x₁', x₂') and, proceeding from a central axis of symmetry, the reference marking regions are arranged in mirror symmetric fashion and with reference marking coarse grating constants (TP_{RMG}) which respectively increase towards the outside.

14. Optical position measuring device according to at least one of the preceding claims,
- wherein a transmission grating arrangement is disposed in front of a divergently emitting light source (22) in the scanning unit (20), said transmission grating arrangement consisting of a periodic transmission-type transmission grating (23.1) and an adjacently arranged transmission slit (23.2), and
- wherein the detector arrangement comprises an incremental signal detector (25.1) and a reference signal detector (25.2).

15. Optical position measuring device according to at least one of the preceding claims, wherein the measure (10) is embodied as a reflection measure and has alternately arranged reflective graduation regions with different phase-shifting effects.

## Revendications

1. Dispositif de mesure de position optique destiné à déterminer la position relative de deux objets mobiles l'un par rapport à l'autre dans au moins deux directions de mesure (x, y), ledit dispositif comprenant
- deux unités de balayage (20) qui sont reliées à l'un des deux objets et qui comprennent chacune au moins une source de lumière (22), une ou plusieurs grilles (23.1, 23.2) et un ensemble de détecteurs et
- une échelle de mesure (10) qui est reliée à l'autre objet et qui comporte deux pistes s'étendant dans une première direction de mesure (x) et pourvues de graduations incrémentielles (12.1, 12.2 ; 112.2) qui comprennent chacune des zones (12.1a, 12.1b, 12.2a, 12.2b ; 112.2a, 112.2b) qui sont disposées périodiquement le long d'une direction de graduation incrémentielle (x₁', x₂') et qui présentent des propriétés optiques différentes, les deux directions de graduations incrémentielles (x₁', x₂') formant l'une par rapport à l'autre un angle (β) compris entre 0° et 90° et au moins un repère de référence (13.1, 13.2 ; 113.2) étant intégré dans chacune des deux graduations incrémentielles (12.1, 12.2 ; 112.2), un signal de référence pouvant être généré à une position de référence définie (x_{REF}, y_{REF}) le long de chaque direction de mesure (x, y) à partir du balayage du repère de référence et le repère de référence (13.1, 13.2 ; 113.2) contenant des parties apériodique et périodique (14.1, 14.2).

2. Dispositif de mesure de position optique selon la revendication 1, le repère de référence (13.1, 13.2 ; 113.2) étant disposé dans une sous-zone limitée en surface dans la graduation incrémentielle respective (12.1, 12.2 ; 112.2) et, dans cette sous-zone, la partie apériodique et la partie périodique du repère de référence (14.1, 14.2) étant conçues pour être mélangées l'une avec l'autre.

3. Dispositif de mesure de position optique selon la revendication 2, la sous-zone étant rectangulaire et l'axe longitudinal du rectangle étant orienté perpendiculairement à la direction de graduation incrémentielle (x₁', x₂') dans la graduation incrémentielle respective (12.1, 12.2 ; 112.2).

4. Dispositif de mesure de position optique selon la revendication 3, le repère de référence rectangulaire (13.1, 13.2 ; 113.2) s'étendant sur toute la largeur (B) de la piste pourvue de la graduation incrémentielle respective (12.1, 12.2 ; 112.2).

5. Dispositif de mesure de position optique selon l'une au moins des revendications précédentes, les parties apériodique et périodique du repère de référence (14.1, 14.2) étant spatialement séparées perpendiculairement à la direction de graduation incrémentielle respective (x₁', x₂').

6. Dispositif de mesure de position optique selon la revendication 5,
- la partie périodique du repère de référence (14.1) comportant une première constante de grille de repère de référence (TP_{RM1}) qui est identique à la constante de grille de graduation incrémentielle respective (TP_{INC}) et
- la partie apériodique du repère de référence (14.2) contenant respectivement une pluralité de structures de réseau qui présentent une deuxième constante de réseau de repère de référence (TP_{RM2}) qui varie localement dans la direction de graduation incrémentielle (x₁', x₂').

7. Dispositif de mesure de position optique selon la revendication 6, la partie apériodique du repère de référence (14.2) comprenant une pluralité de structures de grille à symétrie spéculaire dont la deuxième constante de grille de repère de référence (TP_{RM2}) augmente symétriquement vers l'extérieur à partir d'un axe de symétrie central (S) perpendiculaire à la direction de graduation incrémentielle (x₁', x₂').

8. Dispositif de mesure de position optique selon la revendication 5, les parties apériodiques du repère de référence (14.2) étant disposées perpendiculairement à la direction de graduation incrémentielle (x₁', x₂') périodiquement avec une troisième constante de grille de repère de référence (TP_{RM3}) .

9. Dispositif de mesure de position optique selon la revendication 8, la troisième constante de grille de repère de référence (TP_{RM3}) étant choisie de telle sorte qu'un déplacement d'une unité de balayage (20) perpendiculairement à la direction de graduation incrémentielle (x₁', x₂') ne génère pas de variation de signal.

10. Dispositif de mesure de position optique selon la revendication 5, les parties périodique et apériodique du repère de référence (14.1, 14.2) ayant un rapport de surface de 1:1 l'une par rapport à l'autre.

11. Dispositif de mesure de position optique selon l'une au moins des revendications 1 à 4, la partie périodique du repère de référence étant conçue comme une superstructure périodique intégrée dans la partie apériodique du repère de référence (113.2).

12. Dispositif de mesure de position optique selon la revendication 11,
- la partie périodique du repère de référence présentant une constante de grille de repère de référence fine (TP_{RMF}) qui correspond à la constante de grille de graduation incrémentielle (TP_{INC}) de la graduation incrémentielle respective (112.2) et
- la partie apériodique du repère de référence étant formée par deux zones de repère de référence différentes qui sont disposées en alternance avec une constante de grille de repère de référence grossière (TP_{RMG}) le long de la direction de graduation incrémentielle (x₁', x₂') et présentant chacune des rapports différents de largeur de zone de graduation (b_{RM}) et de constante de grille de repère de référence fine (TPF_{RMF}).

13. Dispositif de mesure de position optique selon la revendication 12, les zones de repère de référence de conceptions différentes étant disposées de manière apériodique le long de la direction de graduation incrémentielle (x₁', x₂') et, à partir d'un axe de symétrie central, les zones de repère de référence étant disposées à symétrie spéculaire et vers l'extérieur avec des constantes de grille de repère de référence grossières (TP_{RMG}) qui augmentent.

14. Dispositif de mesure de position optique selon l'une au moins des revendications précédentes,
- un ensemble de grilles d'émission étant disposé en amont d'une source de lumière à rayonnement divergent (22) dans l'unité de balayage (20), lequel ensemble comprend une grille d'émission à transmission périodique (23.1) et un espace d'émission (23.2) adjacent et
- l'ensemble de détecteurs comprenant un détecteur de signal incrémentiel (25.1) et un détecteur de signal de référence (25.2).

15. Dispositif de mesure de position optique selon l'une au moins des revendications précédentes, l'échelle de mesure (10) étant conçue comme une échelle de mesure de réflexion et comportant des zones de graduation réfléchissantes disposées en alternance qui ont des effets de déphasage différents.
